# EUROPÄISCHE PATENTANMELDUNG

(11) **EP 3 431 817 A1**
(43) Veröffentlichungstag der Anmeldung: **23.01.2019**
(21) Anmeldenummer: 18179726.7
(22) Anmeldetag: 26.06.2018
(51) Int. Cl.: F16H 37/08, F16H 15/54

(54) **VERSTELLBARES KEGELSCHEIBENGETRIEBE**

(30) Priorität: 18.07.2017 DE 102017116098
(71) Anmelder: Schweizer, Viktor, 72285 Pfalzgrafenweiler (DE)
(72) Erfinder: Schweizer, Viktor, 72285 Pfalzgrafenweiler (DE)
(74) Vertreter: Späth, Dieter

(57) **Zusammenfassung**

Die Erfindung betrifft ein verstellbares Kegeischeibengetriebe (1) mit einem vor oder nachgeschalteten Planetengetriebe (16) als Differenzialgetriebe (17). Für das Kegelscheibengetriebe (1) schlägt die Erfindung ein Paar Kegelscheiben (2) mit hohlkegelförmigen Reibflächen (5) vor, zwischen denen ein Kegeiring (3) angeordnet ist, dessen ring- und kegelstumpfförmige Reibflächen (7) auf den Reibflächen (5) der Kegelscheiben (2) wälzen. Durch stufenlose Verstellung eines Abstands einer Drehachse (6) des Kegelrings (3) von einer Drehachse (4) der Kegelscheiben (2) ist eine Übersetzung des Kegelscheibengetriebes (1) stufenlos einstellbar.

## Beschreibung

Die Erfindung betrifft verstellbares Kegelscheibengetriebe. Verstellbar meint eine Einstellbarkeit einer Übersetzung des Kegelscheibengetriebes, vorzugsweise ist die Übersetzung stufenlos einstellbar.

Die Patentanmeldung US 2006/0 223 667 A1 offenbart ein stufenlos verstellbares Kegelscheibengetriebe mit zwei Kegelscheiben, die wie in einem Kegelscheibengetriebe mit Keilriemen gleichachsig angeordnet, miteinander drehfest und um ihre Achse als Drehachse drehbar sind. Kegelflächen der beiden Kegelscheiben sind einander zugewandt und bilden Reibflächen. Ein axialer Abstand der beiden Kegelscheiben ist einstellbar. Zwischen den beiden Kegelscheiben ist ein Kegelring angeordnet, dessen kreisringförmige Stirnflächen hohlkegelringförmig als Reibflächen ausgebildet sind. Der Kegelring ist um seine Achse als Drehachse drehbar, die parallel zur Drehachse der Kegelscheiben verläuft und deren Abstand von der Drehachse der Kegelscheiben verstellbar ist. Ein Keilwinkel der Reibflächen des Kegelrings des bekannten Kegelscheibengetriebes ist betragsmäßig gleich groß wie ein Keilwinkel der Reibflächen der Kegelscheiben, allerdings mit entgegengesetztem Vorzeichen, das heißt die Reibflächen des Kegelrings sind Hohlflächen, das heißt Innenflächen einer Mantelfläche eines niedrigen, das heißt axial kurzen Kegelstumpfs. Die Kegelscheiben werden mit ihren Reibflächen gegen die Reibflächen des Kegelrings gedrückt, so das die Reibflächen des Kegelrings und der Kegelscheiben aufeinander wälzen. Die Reibflächen der Kegelscheiben und des Kegelrings liegen an einer radialen Kontaktlinie aneinander an. Ein Reibradius und damit eine Übersetzung des Kegelscheibengetriebes ändert sich mit dem Abstand der Drehachse der Kegelscheiben von der Drehachse des Kegelrings. Bei Gleichachsigkeit liegen die Reibflächen der Kegelscheiben auf dem gesamten Umfang an den Reibflächen des Kegelrings an. Der Kegelring des bekannten Kegelscheibengetriebes ist mit drei oder vier ungleichmäßig außen über seinen Umfang verteilt angeordneten Lagerrollen drehbar gelagert.

Aufgabe der Erfindung ist ein Kegelscheibengetriebe mit verbessertem Kraftschluss vorzuschlagen.

Diese Aufgabe wird durch die Merkmale des Anspruchs 1 gelöst. Das erfindungsgemäße, verstellbare Kegelscheibengetriebe weist zwei Kegelscheiben auf, zwischen denen ein Kegelring angeordnet ist. Einander zugewandte Stirnflächen der Kegelscheiben sind hohlkegelförmig, worunter auch hohlkegelringförmig zu verstehen ist, und bilden Reibflächen. Hohlkegelförmig bzw. Hohlkegelringförmig bedeutet, dass die einander zugewandten Stirn- und Reibflächen der beiden Kegelscheiben Innenflächen einer Mantelfläche eines geraden Kreiskegels oder Kreiskegelstumpfs sind. Ein Kegelwinkel ist vorzugsweise stumpf und betragsmäßig in der Größenordnung des Kegelwinkels herkömmlicher Kegelscheiben eines Kegelscheibengetriebes mit Keilriemen, allerdings mit umgekehrtem bzw. negativem Vorzeichen, weil die Reibflächen der Kegelscheiben des erfindungsgemäßen Kegelscheibengetriebes Hohl- bzw. Innenkegelflächen sind.

Stirnflächen des Kegelrings des erfindungsgemäßen Kegelscheibengetriebes sind Kegelringflächen, das heißt Außenflächen einer Mantelfläche eines geraden Kreiskegelstumpfs. Sie bilden Reibflächen des Kegelrings, gegen die die Reibflächen der Kegelscheiben gedrückt werden, so dass die Reibflächen des Kegelrings und der Kegelscheiben aufeinander wälzen. Aufeinander wälzende Reibflächen des Kegelrings und der Kegelscheiben weisen betragsmäßig gleiche Kegelwinkel mit umgekehrten Vorzeichen auf.

Die Kegelscheiben sind gleichachsig angeordnet, um ihre Achse als Drehachse drehbar, drehfest miteinander und axial beweglich. Sie werden axial aufeinander zu beaufschlagt, was auch als Zusammenspannen der Kegelscheiben aufgefasst werden kann, und dadurch ihre Reibflächen gegen die Reibflächen des zwischen ihnen angeordneten Kegelrings gedrückt. Zusammenspannen bedeutet nicht, dass die Kegelscheiben in Kontakt miteinander gelangen, sondern dass ihre Reibflächen gegen die Reibflächen des Kegelrings gedrückt werden.

Der Kegelring ist um seine Achse als Drehachse drehbar, die parallel zur Drehachse der Kegelscheiben verläuft und deren Abstand von der Drehachse der Kegelscheiben verstellbar ist. Die Reibflächen der Kegelscheiben liegen an radialen Kontaktlinien an den Reibflächen des Kegelrings an, wobei sich ein Reibradius und damit eine Übersetzung des Kegelscheibengetriebes bei einer Änderung des Abstands der Drehachsen ändert. Bei Gleichachsigkeit liegen die Reibflächen der Kegelscheiben über den gesamten Umfang an den Reibflächen des Kegelrings an.

Ein Vorteil der Erfindung ist die Möglichkeit, das Kegelscheibengetriebe so anzutreiben, dass der Kegelring im Sinne eines sich vergrößernden Abstands seiner Drehachse von der Drehachse der Kegelscheiben beaufschlagt wird, das heißt dass der Kegelring nach außen in einen enger werdenden Zwischenraum zwischen den hohlkegelförmigen Reibflächen der Kegelscheiben beaufschlagt wird. Diese Beaufschlagung erfolgt durch den Antrieb des Kegelscheibengetriebes und erhöht die Andruckkraft der Reibflächen gegeneinander. Die Antriebsrichtung ist davon abhängig, ob die Kegelscheiben oder der Kegelring angetrieben werden. Wird der Kegelring angetrieben, ist die Drehrichtung umgekehrt wie bei einem Antrieb der Kegelscheiben, um die Erhöhung der Andruckkraft der Reibflächen gegeneinander zu bewirken.

Vorzugsweise weist der Kegelring einen An- oder Abtrieb an seinem Innenumfang auf. Der An- oder Abtrieb kann mittels einer Innenverzahnung des Kegelrings erfolgen, die mit einem Stirnrad, das heißt einem außenverzahnten Zahnrad, kämmt.

Ein An- oder Abtriebsrad, das am Innenumfang des Kegelrings kämmt oder wälzt, ist exzentrisch zu den Kegelscheiben und selbstverständlich exzentrisch zum Kegelring.

Zur Einstellung bzw. Änderung der Übersetzung des Kegelscheibengetriebes sieht eine Ausgestaltung der Erfindung vor, den um seine Achse als Drehachse drehbaren Kegelring um eine davon beabstandete Schwenkachse der Kegelscheiben schwenkbar auszubilden. Die Schwenkachse, um die der Kegelring zur Einstellung bzw. Änderung der Übersetzung des Kegelscheibengetriebes schwenkbar ist, ist sowohl zur Drehachse des Kegelrings selbst als auch zur Drehachse der Kegelscheiben exzentrisch. Durch Schwenken des Kegelrings um die Schwenkachse ändert sich der Abstand der Drehachse des Kegelrings von der Drehachse der Kegelscheiben und dadurch ein Reibradius der Kontaktlinien, an denen die Reibflächen der Kegelscheiben an den Reibflächen des Kegelrings anliegen. Mit der Änderung des Reibradius ändert sich die Übersetzung des Kegelscheibengetriebes.

Vorzugsweise geht die Schwenkachse des Kegelrings zur Verstellung des Abstands der Drehachse des Kegelrings von der Drehachse der Kegelscheiben und zur Einstellung der Getriebeübersetzung innen durch den Kegelring hindurch. Insbesondere zusammen mit dem in dem Kegelring angeordneten An- oder Abtriebsrad ergibt sich ein kompakter Getriebeaufbau.

Zur Ver- oder Einstellung der Übersetzung des Kegelscheibengetriebes kann der Kegelring in Bezug auf die Kegelscheiben auf einer geraden oder nicht geraden Linie verstellbar sein. Eine Ausgestaltung der Erfindung sieht ein Schwenken des Kegelrings um eine zu der Drehachse des Kegelrings selbst und zu der Drehachse der Kegelscheiben exzentrische Schwenkachse vor, die mit Abstand von der Drehachse des Kegelrings vorzugsweise innen durch den Kegelring hindurch geht. Dazu sieht eine Ausgestaltung der Erfindung einen Ringträger vor, an dem der Kegelring um seine Drehachse drehbar gelagert und der um die zu der Drehachse der Kegelscheiben exzentrische Schwenkachse schwenkbar ist.

Eine Weiterbildung oder auch eine eigene Ausgestaltung der Erfindung sieht eine Spanneinrichtung vor, die einen Abstand der beiden Kegelscheiben voneinander verkleinert und die Kegelscheiben zusammen spannt und dabei ihre Reibflächen gegen die Reibflächen des Kegelrings drückt. Zur Erinnerung: Zusammenspannen der Kegelscheiben bedeutet nicht, dass sie sich berühren, sondern das ihre Reibflächen gegen die Reibflächen des Kegelrings gedrückt werden. Dazu sieht eine Ausgestaltung der Erfindung vor, dass die Spanneinrichtung eine Schwenkbewegung in eine axiale Bewegung wandelt, was beispielsweise mit einer wendelförmigen Rampe oder dergleichen erfolgen kann, die sich an einer wendelförmigen Gegenrampe oder einem Widerlager abstützt. Die Schwenkbewegung kann auch mit einem Gewinde, auch mit einem Gewinde, das keinen vollständigen Gewindegang aufweist sondern sich in Umfangsrichtung nur über einen Bruchteil einer vollen Umdrehung erstreckt in ein axiale Bewegung gewandelt werden. Eine Schwenkbewegung in einer Schwenkrichtung, die hier als Spannrichtung bezeichnet wird, beaufschlagt die Kegelscheiben zusammen, das heißt spannt die Kegelscheiben zusammen und drückt ihre Reibflächen gegen die Reibflächen des Kegelrings. Eine entgegengesetzte Schwenkbewegung lockert, löst bzw. entfernt die Kegelscheiben und die Reibflächen voneinander. Eine Weiterbildung sieht vor, dass ein Federelement, das exzentrisch an der Spanneinrichtung angreift, die Spanneinrichtung mit einem Moment im Sinne einer Verkleinerung des Abstands der Kegelscheiben voneinander und im Sinne eines Zusammenspannens der Kegelscheiben beaufschlagt.

Vorzugsweise greift das Federelement exzentrisch zur Schwenkachse an dem Ringträger an und beaufschlagt ihn im Sinne einer Vergrößerung des Abstands der Drehachse des Kegelrings von der Drehachse der Kegelscheiben. Bei dieser Ausgestaltung der Erfindung spannt also das Federelement über die Spanneinrichtung die beiden Kegelscheiben zusammen und drückt damit die Reibflächen der Kegelscheiben gegen die Reibflächen des Kegelrings, und beaufschlagt über den Ringträger, an dem der Kegelring um seine Drehachse drehbar gelagert ist, nach außen in einen enger werdenden, keilförmigen Zwischenraum zwischen den hohlkegelförmigen Reibflächen der Kegelscheiben, was ebenfalls im Sinne eines Drückens der Reibflächen des Kegelrings gegen die Reibflächen der Kegelscheiben wirkt. Aufgrund des sog. Keilprinzips erhöht sich wie bei einem Keilriemengetriebe eine Andruck- und Reibkraft zwischen den aufeinander wälzenden Reibflächen des Kegelrings und der Kegelscheiben.

Eine Weiterbildung der Erfindung sieht vor, dass die Spanneinrichtung eine Spannscheibe aufweist, der beispielsweise die wendeiförmige Rampe oder ein Gewinde aufweist und der sich durch Schwenken axial zu den Kegelscheiben bewegt. Die Spannscheibe weist eine koaxiale, kegelstumpfförmige Laufbahn auf, auf der Kugeln wälzen. Bewegt sich die Spannscheibe axial, drückt er die auf seiner kegelstumpfförmigen Laufbahn wälzenden Kugeln radial nach außen oder lässt sie bei umgekehrter Schwenkrichtung nach innen. Die Kugeln befinden sich in einem die Laufbahn koaxial und kreisringförmig umschließenden und radial nach außen beispielsweise keilförmig enger werdenden Zwischenraum zwischen einem axialfesten Teil und einem axial beweglichen Teil der Spanneinrichtung. Werden die Kugeln durch Schwenken der Spannscheibe radial nach außen gedrückt, drücken sie das axial bewegliche Teil von dem axial festen Teil ab. Diese Axialbewegung wird zum Zusammenspannen der beiden Kegelscheiben genutzt. Diese Weiterbildung der Erfindung entkoppelt die Spanneinrichtung von einer Drehung der Kegelscheiben und ermöglicht eine erhebliche mechanische Kraftübersetzung zum Zusammenspannen der beiden Kegelscheiben.

Eine Ausgestaltung der Erfindung sieht ein Differenzialgetriebe vor, das einen Getriebeein- oder -ausgang aufweist, der mit den Kegelscheiben antriebsverbunden ist, und das einen weiteren Getriebeein- oder -ausgang aufweist, der mit dem Kegelring antriebsverbunden ist. Ein dritter Getriebeein- oder -ausgang des Differenzialgetriebes dient als Antrieb oder Abtrieb des Kegelscheibengetriebes mit dem Differenzialgetriebe. Der weitere Getriebeein- oder -ausgang des Differenzialgetriebes kann unmittelbar oder mittelbar, beispielsweise über das mit dem Innenumfang des Kegelrings wälzende An- oder Abtriebsrad antriebsverbunden sein.

Als Differenzialgetriebe verwendet die Erfindung insbesondere ein Planetengetriebe. Dabei ist bei einer Ausgestaltung der Erfindung ein Planetenträger des Planetengetriebes drehfest mit den Kegelscheiben des Kegelscheibengetriebes verbunden und der Kegelring beispielsweise über das an seinem Innenumfang kämmende oder wälzende An- oder Abtriebsrad oder in anderer Weise mit einem Hohlrad des Planetengetriebes antriebsverbunden. Ein Antrieb des Kegelscheibengetriebes erfolgt zusammen mit einem Antrieb des Planetenträgers des Planetengetriebes an den Kegelscheiben und ein Abtrieb an einem Sonnenrad des Planetengetriebes. Andere An- und Abtriebsmöglichkeiten des Kegelscheibengetriebes und des Planetengetriebes und andere Antriebsverbindungen des Kegelscheibengetriebes mit dem Planetengetriebe sind nicht ausgeschlossen.

Eine Ausgestaltung der Erfindung sieht zwei Kegelscheibenpaare vor, die koaxial zueinander angeordnet sind, wobei hohlkegelstumpfförmige, lochscheibenförmige Reibflächen eines äußeren Kegelscheibenpaars kegelförmige oder auch kegelstumpfförmige Reibflächen eines inneren Kegelscheibenpaars koaxial umschließen. Zwischen den Kegelscheibenpaaren ist der Kegelring angeordnet, der an einander abgewandten und den Reibflächen der Kegelscheibenpaare zugewandten Stirnseiten radial weiter außen zwei äußere, kegelstumpfförmige Reibflächen, die auf den hohlkegelstumpfförmigen Reibflächen des äußeren Kegelscheibenpaars wälzen, und radial weiter innen zwei innere, hohlkegelstumpfförmige Reibflächen, die auf den kegelstumpfförmigen Reibflächen des inneren Kegelscheibenpaars wälzen, aufweist. Es handelt sich hierbei um zwei antriebsmäßig hintereinandergeschaltete Kegelscheibengetriebe, deren Moment über den gemeinsamen Kegelring übertragen wird. Die koaxiale Anordnung der Kegelscheibenpaare und des Kegelrings dazwischen ergibt einen kompakten Aufbau. Eine Veränderung eines Abstands der Drehachse des Kegelrings von der gemeinsamen Drehachse der beiden Kegelscheibenpaare vergrößert den Reibradius des Kegelrings mit dem äußeren Kegelscheibenpaar und verkleinert den Reibradius des Kegelrings mit dem inneren Kegelscheibenpaar oder umgekehrt. Das hat zur Folge, dass sich eine Übersetzung vom äußeren Kegelscheibenpaar auf den Kegelring entgegengesetzt zu einer Übersetzung vom Kegelrings auf das innere Kegelscheibenpaar ändert. Daraus ergibt sich ein großer Verstellbereich der Gesamtübersetzung dieses Kegelscheibengetriebes entsprechend einem Produkt der Übersetzungen der beiden Einzelgetriebe.

Die Erfindung wird nachfolgend anhand zweier in der Zeichnung dargestellter Ausführungsbeispiele näher erläutert. Es zeigen:
- Figur 1: ein verstellbares Kegelscheibengetriebe gemäß der Erfindung im Achsschnitt;
- Figur 2: das Kegelscheibengetriebe aus Figur 1 in einer Seitenansicht, wobei eine vordere, das übrige Kegelscheibengetriebe verdeckende Kegelscheibe und ein Ringträger weggelassen sind;
- Figur 3: einen Achsschnitt eines Kegelrings des Kegelscheibengetriebes aus Figuren 1 und 2;
- Figur 4: einen Ringträger des Kegelscheibengetriebes aus Figuren 1 und 2 in Ansicht;
- Figur 5: eine Schemadarstellung des Kegelscheibengetriebes aus Figuren 1 und 2 mit einem Differenzialgetriebe;
- Figur 6: eine erfindungsgemäße mechanische Übersetzungseinstelleinrichtung für das Kegelscheibengetriebe in Stirnansicht;
- Figur 7a: die Übersetzungseinstelleinrichtung geschnitten entlang der abgewinkelten Schnittlinie VII-VII in Figur 6 ohne Achsabstand;
- Figur 7b: die Übersetzungseinstelleinrichtung geschnitten entlang der abgewinkelten Schnittlinie VII-VII in Figur 6 mit Achsabstand;
- Figur 8: ein zweites Ausführungsbeispiel eines erfindungsgemäßen Kegelscheibengetriebes in Seitenansicht;
- Figur 9a: einen Achsschnitt des Kegelscheibengetriebes aus Figur 8;
- Figur 9b: den Achsschnitt ohne Auslenkung des Kegelscheibengetriebes; und
- Figur 10: einen Achsschnitt eines Kegelrings des Kegelscheibengetriebes aus Figuren 8 und 9a, b.

Die Zeichnungen sind vereinfachte Schemadarstellungen zum Verständnis und zur Erläuterung der Erfindung.

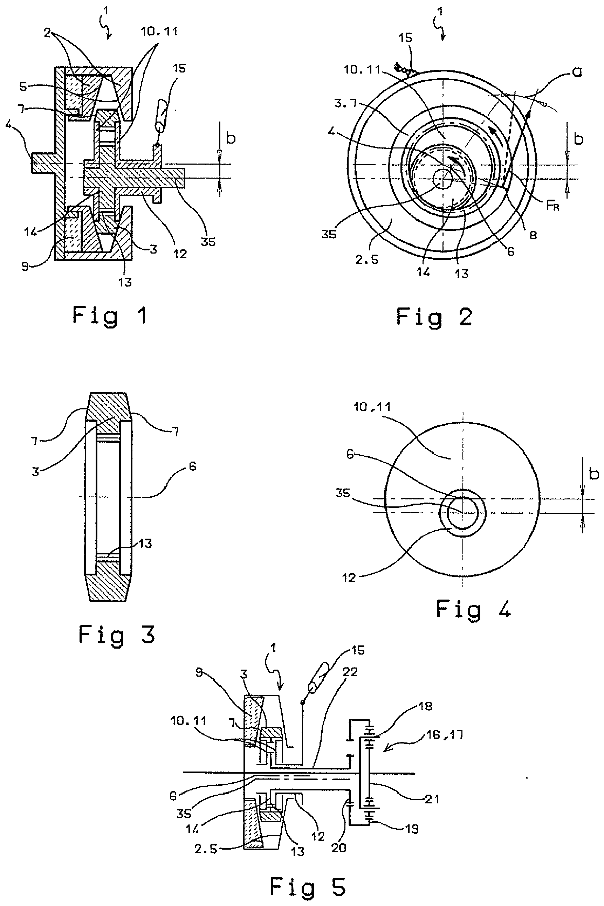

Das in Figuren 1 und 2 dargestellte, erfindungsgemäße verstellbare Kegelscheibengetriebe 1 weist zwei Kegelscheiben 2, auf, zwischen denen ein Kegelring 3 angeordnet ist. Wie bei Kegelscheibengetrieben mit Keilriemen sind die beiden Kegelscheiben 2 gleichachsig angeordnet, um ihre Achse als Drehachse 4 drehbar, drehfest miteinander und in ihrem axialen Abstand voneinander verstellbar. In Figur 2 ist eine in Blickrichtung vor dem Kegelring 3 befindliche der beiden Kegelscheiben 2 nicht gezeichnet, damit der Kegelring 3 und die Reibfläche 5 einer in Blickrichtung hinter der Kegelring 3 befindlichen Kegelscheibe 2 sichtbar sind. Einander zugewandte Stirnflächen der Kegelscheiben 2 bilden Reibflächen 5, die allerdings im Gegensatz zu Reibflächen von Kegelscheiben bekannter Kegelscheibengetriebe nicht kegel- oder kegelstumpfförmig sondern hohlkegel- bzw. hohlkegelstumpfförmig sind. Die Reibflächen 5 der Kegelscheiben 2 des erfindungsgemäßen Kegelscheibengetriebes 1 sind Innenflächen einer Mantelfläche eines geraden Kegels oder Kegelstumpfs. Im Ausführungsbeispiel weisen die Reibflächen 5 einen negativen (weil sie Hohlkegelflächen sind) Kegelwinkel wie Kegelscheiben bekannter Kegelscheibengetriebe von beispielsweise zwischen 160° und 175° bzw. von 173° auf.

Der Kegelring 3 ist um seine Achse als Drehachse 6 drehbar, die parallel zur Drehachse 4 der Kegelscheiben 2 verläuft, wobei ein Abstand der Drehachsen 4, 6 zu einer Einstellung bzw. Verstellung einer Übersetzung des Kegelscheibengetriebes 1 verstellbar ist. Die Übersetzung ist stufenlos verstellbar. Den Reibflächen 5 der Kegelscheiben 2 zugewandte, ringförmige Stirnflächen des Kegelrings 3 sind kegelförmig und bilden Reibflächen 7 des Kegelrings 3, die auf den Reibflächen 5 der Kegelscheiben 2 wälzen. Ein Kegelwinkel der Reibflächen 7 des Kegelrings 3 ist betragsmäßig gleich groß wie der Kegelwinkel der Reibflächen 5 der Kegelscheiben 2, allerdings positiv, weil die Reibflächen 7 des Kegelrings 3 Außenflächen einer Mantelfläche eines geraden Kegelstumpfs sind. Die Kegelscheiben 2 werden zusammen gespannt, so dass ihre Reibflächen 5 gegen die Reibflächen 7 des Kegelrings 3 gedrückt werden und die Reibflächen 5, 7 des Kegelrings 3 und der Kegelscheiben 2 aufeinander wälzen. Zusammenspannen der Kegelscheiben 2 bedeutet, dass die Kegelscheiben 2 axial zueinander im Sinne einer Verkleinerung ihres Abstands voneinander beaufschlagt werden, nicht aber, dass die Kegelscheiben 2 einander berühren. Bei einem Drehantrieb des Kegelrings 3 werden die Kegelscheiben 2 drehend angetrieben und umgekehrt. Die Reibflächen 5, 7 der Kegelscheiben 2 und des Kegelrings 3 liegen an radialen Kontaktlinien 8 aneinander an, deren Abstand von der Drehachse 4 der Kegelscheiben 2 sich mit dem Abstand der Drehachse 6 des Kegelrings 3 von der Drehachse 4 der Kegelscheiben 2 ändert. Ein Reibradius, d. h. ein radialer Abstand der Kontaktlinien 8, an denen die Reibflächen 5, 7 der Kegelscheiben 2 und des Kegelrings 3 aneinander anliegen, von der Drehachse 4 der Kegelscheiben 2 bestimmt eine Übersetzung des erfindungsgemäßen Kegelscheibengetriebes 1, so dass durch Änderung des Abstands der Drehachse 6 des Kegelrings 3 von der Drehachse 4 der Kegelscheiben 2 die Übersetzung des Kegelscheibengetriebes 1 stufenlos ver- bzw. einstellbar ist.

In Figuren 1 und 5 werden die Kegelscheiben 2 mit einem Druckmittel 9 pneumatisch oder hydraulisch zusammen gespannt.

Zum Ein- bzw. Verstellen des Abstands der Drehachse 6 des Kegelrings 3 von der Drehachse 4 der Kegelscheiben 2 und damit zur Ein- bzw Verstellung der Übersetzung weist das Kegelscheibengetriebe 1 einen Ringträger 10 auf, an dem der Kegelring 3 drehbar gelagert ist und der um eine zu der Drehachse 6 des Kegelrings 3 und zu der Drehachse 4 der Kegelscheiben 2 parallele und exzentrische Schwenkachse 35 schwenkbar ist, so dass der Kegelring 3 auf einem Kreisbogen um die zu der Drehachse 4 der Kegelscheiben 2 exzentrische Schwenkachse 35 schwenkbar ist. Dadurch ist der Abstand seiner Drehachse 6 von der Drehachse 4 der Kegelscheiben ein- bzw. verstellbar. Im Ausführungsbeispiel weist der Ringträger 10, der in Figur 4 als Einzelteil gezeichnet ist, zwei deckungsgleich Kreislochscheiben 11 mit zu ihrem Außenumfang exzentrischen Löchen auf, an deren Außenumfang der Kegelring 3 drehbar gleitgelagert ist. Der Ringträger 10 bzw. seine Kreislochscheiben 11 weisen eine exzentrische Hohlwelle 12 auf, um deren Achse sie und damit der Kegelring 3 schwenkbar ist. Die Hohlwelle 12 und damit die Schwenkachse 35 des Ringträgers 10 und des Kegelrings 3 ist exzentrisch zu der Drehachse 4 der Kegelscheiben 2.

Der Kegelring 3 weist eine Innenverzahnung 13 an seinem Innenumfang wie ein innenverzahntes Zahnrad auf. In der Hohlwelle 12 des Ringträgers 10 ist ein Stirnrad, also ein außenverzahntes Zahnrad, als An- oder Abtriebsrad 14 des Kegelrings 3 und zugleich des Kegelscheibengetriebes 1 drehbar gelagert, das mit der Innenverzahnung 13 des Kegelrings 3 kämmt und dessen Drehachse gleichachsig mit der Schwenkachse 35 des Kegelrings 3 und des Ringträgers 10 ist, weil es in der Hohlwelle 12 des Ringträgers 10 drehbar gelagert ist.An- und Abtriebsachsen verlagern sich nicht, wenn der Ringträger 10 mit dem Kegelring 3 zum Ändern der Übersetzung des Kegelscheibengetriebes 1 verschwenkt wird. Im Ausführungsbeispiel wird der Ringträger 10 mit einem Hydraulikzylinder 15 geschwenkt, der exzentrisch an der Hohlwelle 12 angreift. Das Kegelscheibengetriebe 1 wird an den Kegelscheiben 2 angetrieben und weist einen Abtrieb am An- oder Abtriebsrad 14 auf oder umgekehrt.

Figur 5 zeigt das Kegelscheibengetriebe 1 aus Figuren 1 und 2 mit einem Planetengetriebe 16 als Differenzialgetriebe 17, dessen einer Getriebeein- oder Ausgang mit den Kegelscheiben 2 und dessen anderer Getriebeein- oder Ausgang über das An- oder Abtriebsrad 14 mit dem Kegelring 2 antriebsverbunden ist. Ein dritter Getriebeein- oder Ausgang des Planetengetriebes 16 bildet einen Getriebeein- oder Ausgang eines Getriebeaggregats, das das Kegelscheibengetriebe 1 und das Planetengetriebe 16 umfasst. Im Ausführungsbeispiel ist ein Planetenträger 18 des das Differenzialgetriebe 17 bildenden Planetengetriebes 16 drehfest mit den Kegelscheiben 2 des Kegelscheibengetriebes 1 und ein Hohlrad 19 des Planetengetriebes 16 wird von dem An- oder Abtriebsrad 14 über ein mit ihm drehfestes Stirnrad 20 angetrieben, d. h. das Hohlrad 19 des Planetengetriebes 16 ist mit dem Kegelring 3 des Kegelscheibengetriebes 1 antriebsverbunden. Angetrieben wird das Getriebeaggregat, das das Kegelscheibengetriebe 1 und das das Differenzialgetriebe 17 bildende Planetengetriebe 16 umfasst, an den Kegelscheiben 2 und dem mit den Kegelscheiben 2 drehfesten Planetenträger 18, und einen Abtrieb bildet ein Sonnenrad 21 des Planetengetriebes 16 oder umgekehrt. Andere Antriebsverbindungen zwischen dem Kegelscheibengetriebe 1 und dem Planetengetriebe 16 und ein anderer Antrieb und Abtrieb des Getriebeaggregats schließt die Erfindung nicht aus.

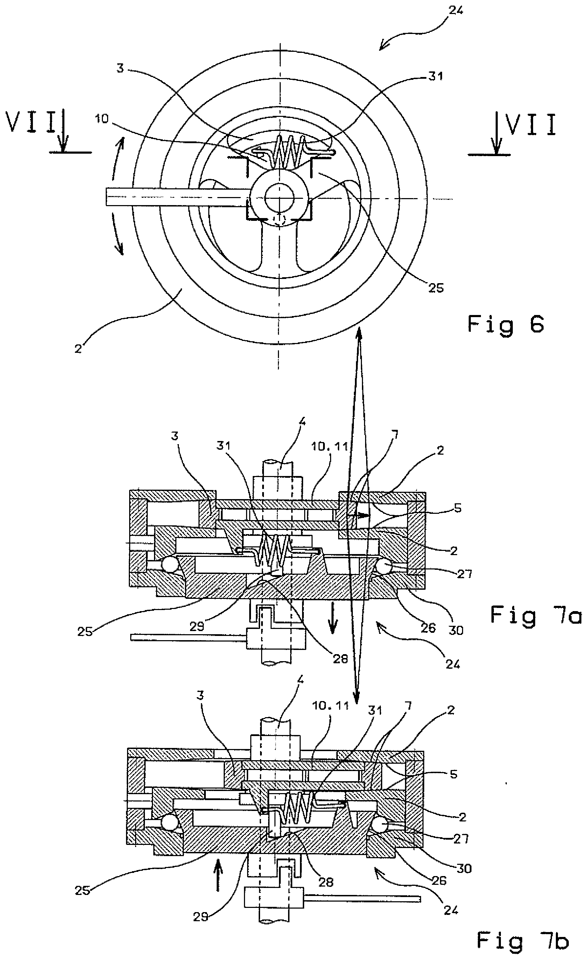

Die Figuren 6 und 7a, 7b zeigen eine mechanische Übersetzungseinstelleinrichtung 24 für das Kegelscheibengetriebe 1 gemäß der Erfindung, die die Kegelscheiben 2 zusammen spannt und damit ihre Reibflächen 5 gegen die Reibflächen 7 des Kegelrings 3 drückt und die den Abstand der Drehachsen 4, 6 der Kegelscheiben 2 und des Kegelrings 3 einstellt. Die Übersetzungseinstelleinrichtung 24 weist eine Spannscheibe 25 auf, die um die Drehachse 4 der Kegelscheiben 2 schwenkbar ist und die eine koaxiale, kegelstumpfförmige Laufbahn 26 für Kugeln 27 aufweist. Die Spannscheibe 25 weist eine wendelförmige und koaxiale Rampe 28 auf, mit der sie sich axial an einem Bolzen als Widerlager 29 abstützt. Dadurch bewegt sich die Spannscheibe 25 axial wenn sie geschwenkt wird. Wird die Spannscheibe 25 in einer Richtung geschwenkt, drängt sie die Kugeln 27 nach außen auf eine Kreisbahn mit größerem Radius (Figur 7a), wird sie entgegengesetzt geschwenkt, wälzen die Kugeln 27 auf der Laufbahn 26 auf einem Kreis mit kleinerem Radius (Figur 7b). Die Kugeln 27 befinden sich in einem Spalt zwischen einer der beiden Kegelscheiben 2 und einem axial festen Widerlagerring 30. Der Spalt umschließt die Laufbahn 26 für die Kugeln 27 koaxial und kreisförmig und der Spalt verengt sich keilförmig nach außen, so dass die Kugeln 27 die eine Kegelscheibe 2 gegen die andere Kegelscheibe 2 spannen, wenn die Spannscheibe 25 so geschwenkt wird, dass sie die Kugeln 27 nach außen drängt. Die Schwenkrichtung der Spannscheibe 25, die die Kugeln 27 nach außen drängt, wird hier als Spannrichtung bezeichnet.

Ein Federelement 31 greift exzentrisch an der Spannscheibe 25 und ebenfalls exzentrisch am Ringträger 10 an. Es beaufschlagt die Spannscheibe 25 in der Spannrichtung und den Ringträger 10 im Sinne einer Vergrößerung des Abstands der Drehachse 6 des Kegelrings 3 von der Drehachse 4 der Kegelscheiben 2. Der Kegelring 3 wird in Bezug auf die Kegelscheiben 2 nach außen und damit in einen nach außen enger werdenden keilförmigen Spalt zwischen den hohlkegelförmigen Reibflächen 5 der Kegelscheiben 2 beaufschlagt. Das sog. Keilprinzip erhöht eine Andruck- und Reibkraft zwischen den aufeinander wälzenden Reibflächen 5, 7 der Kegelscheiben 2 und des Kegelrings 3.

Ein größerer Abstand der Drehachsen 4, 6 bedeutet, dass ein Reibradius, also der Abstand der Kontaktlinie 8, an der die Reibflächen 5, 7 des Kegelrings 3 und der Kegelscheiben 2 aneinander anliegen, größer wird. Die Spannscheibe 25 mit der Laufbahn 26, die Kugeln 27, der Widerlagerring 30 und die eine Kegelscheibe 2 bilden eine Spanneinrichtung, die eine Schwenkbewegung in der Spannrichtung in eine axiale Bewegung wandelt, die die Kegelscheiben 2 zusammen spannt. Zusammen mit dem Ringträger 10 und dem Federelement 31 bildet die Spanneinrichtung die Übersetzungseinstelleinrichtung 24. Im Ausführungsbeispiel ist das Federelement 31 eine Schraubenzugfeder, was allerdings nicht zwingend für die Erfindung ist, es sind verschiedene andere Federn wie beispielsweise eine Schraubendruckfeder, eine Spiralfeder eine Torsionsfeder oder eine Schenkelfeder als Federelement verwendbar, um die Spannscheibe 25 in der Spannrichtung und den Ringträger 10 im Sinne einer Vergrößerung des Abstands der Drehachsen 4, 6 des Kegelrings 3 und der Kegelscheiben 2 zu beaufschlagen (nicht dargestellt). Die Spannscheibe 25 entkoppelt die Spanneinrichtung 31 und die Übersetzungseinstelleinrichtung 24 von einer Drehung des Kegelscheibengetriebes 1: wenn sich die Kegelscheiben 2 drehen, laufen die Kugeln 27 auf der Laufbahn 26 der zwar schwenkbaren, aber nicht mitdrehenden Spannscheibe 25 um.

Eine Richtung einer Reibkraft zwischen den Reibflächen 5, 7 des Kegelrings 3 und der Kegelscheiben 2 verläuft wie in Figur 2 mit dem Kraftpfeil F_{R} angegeben in Richtung einer Sekante zur Kontaktlinie 8. Das hat zur Folge, dass bei einem Drehantrieb eine Kraftkomponente den Kegelring 3 nach außen beaufschlagt in einen nach außen keilförmig enger werdenden Spalt zwischen den hohlkegelförmigen Reibflächen 5 der Kegelscheiben 2. Dadurch erhöht sich eine Andruckkraft der Reibflächen 7 des Kegelrings 3 gegen die Reibflächen 7 der Kegelscheiben 2, wodurch eine höhere Drehmomentübertragung möglich ist.

Aufgrund seiner kompakten Bauweise und der gleichachsigen Anordnung des das Differenzialgetriebe 16 bildenden Planetengetriebes 15 zum Kegelscheibengetriebe 1 eignet sich das in Figur 2 gezeichnete, kupplungslose Getriebe 1 besonders zu einem Einbau in eine Fahrradnabe oder eine Nabe eines Motor-Fahrrads, auch Elektrofahrrads. Dazu wird der Planetenträger 18 mit einer Fahrradkette über ein mit dem Planetenträger 18 drehfestes, nicht dargestelltes Ritzel angetrieben, das Sonnenrad 21 des Planetengetriebes 16 bildet einen Abtrieb des Getriebes und ist drehfest mit der nicht dargestellten Fahrradnabe oder Nabe eines Motor-Fahrrads. Durch eine stufenlose Verstellbarkeit einer Exzentrizität zwischen dem Kegelring 3 und den Kegelscheiben 2 ist eine stufenlose Einstellung einer Übersetzung des Kegelscheibengetriebes 1 möglich. Über das das Differenzialgetriebe 17 bildende Planetengetriebe 16 wird ein großer, stufenloser Übersetzungsbereich des das Kegelscheibengetriebe 1 und das Planetengetriebe 16 umfassenden Getriebes erreicht. Das ist anhand der Figur 2 erläutert worden.

Weitere Anwendungsmöglichkeiten des erfindungsgemäßen Getriebes ist für eine Drehzahlverstellung einer (Ständer-)Bohrmaschine oder von Werkzeugmaschinen wie Dreh- und Fräsmaschinen. Grundsätzlich ist das erfindungsgemäße Getriebe für alle Antriebe mit stufenloser Drehzahländerung verwendbar.

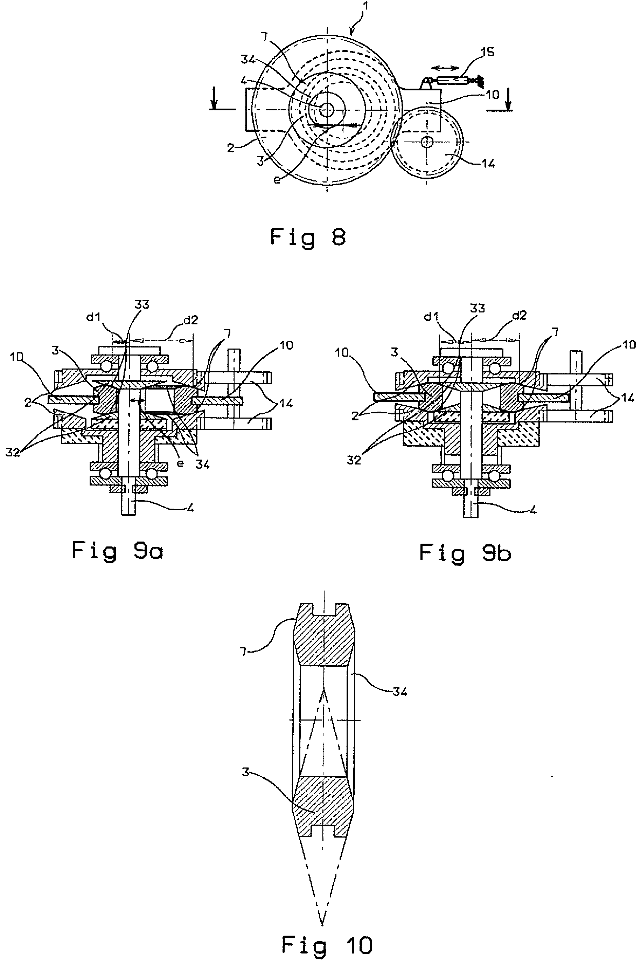

Das in Figuren 8, 9a, 9b gezeichnete, erfindungsgemäße Kegelscheibengetriebe 1 weist wie das Kegelscheibengetriebe 1 aus Figuren 1 und 2 zwei gleichachsige und miteinander drehfeste Kegelscheiben 2 mit hohlkegelstumpfförmigen Reibflächen 5 an ihren einander zugewandten Stirnflächen auf, auf denen kegelstumpfförmige Reibflächen 7 eines zwischen den Kegelscheiben 2 angeordneten Kegelrings 3 wälzen. Diese Kegelscheiben 2 werden nachfolgend auch als äußere Kegelscheiben 2 bezeichnet. Gleichachsig zu den äußeren Kegelscheiben weist das Kegelscheibengetriebe 1 aus Figuren 8, 9a, 9b zwei innere Kegelscheiben 32 auf, die drehfest miteinander und drehbar gegenüber den äußeren Kegelscheiben 2 sind. Sowohl die inneren als auch die äußeren Kegelscheiben 32, 2 sind in axial verstellbar und werden zusammengespannt, so dass ihre Reibflächen 5 gegen die Reibflächen 7 des Kegelrings 3 drücken. Die inneren Kegelscheiben 32 weisen koaxiale, kegelstumpfförmige Reibflächen 33 an ihren einander zugewandten Stirnflächen auf, die auf hohlkegelstumpfförmigen Reibflächen 34 des zwischen den Kegelscheiben 2, 32 angeordneten Kegelrings 3 wälzen. Wie in Figur 10 zu sehen schließen die hohlkegelstumpfförmigen Reibflächen 34 des Kegelrings 3 koaxial innen an die kegelstumpfförmigen Reibflächen 7 des Kegelrings 3 an.

Der Kegelring 3 überträgt eine Drehung der äußeren Kegelscheiben 2 auf die inneren Kegelscheiben 32 oder umgekehrt. Das ist vergleichbar einem Keilriemen eines Kegelscheibengetriebes mit zwei Kegelscheibenpaaren, deren Drehung über einen Keilriemen übertragen wird. Allerdings weist das Kegelscheibengetriebe 1 aus Figuren 8, 9a, 9b mit den gleichachsig und in gleichen Ebenen angeordneten inneren und äußeren Kegelscheiben 32, 2 und dem exzentrisch dazwischen angeordneten Kegelring 3 einen sehr kompakten Aufbau auf. Die beiden inneren Kegelscheiben 32 und die beiden äußeren Kegelscheiben 2 können auch jeweils als (innere) und (äußere) Kegelscheibenpaare 32, 2 bezeichnet werden.

Zur Ver- bzw. Einstellung einer Übersetzung des Kegelscheibengetriebes 1 ist im Ausführungsbeispiel der Kegelring 2 gerade und radial zur Achse und Drehachse 4 der Kegelscheiben 2, 32 verstellbar, die Verstellung erfolgt mit einem Hydraulikzylinder 15. Andere Verstellmöglichkeiten sind nicht ausgeschlossen. Bei der Verstellung vergrößert sich ein Reibradius und damit eine Übersetzung an den inneren Kegelscheiben 32 entgegengesetzt zu den äußeren Kegelscheiben 2, wodurch sich die Gesamtübersetzung sehr stark, nämlich um das Produkt der beiden Einzelübersetzungen ändert. Das in Figuren 8, 9a, 9b gezeichnete Kegelscheibengetriebe 1 ist an sich eine Hintereinanderschaltung zweier Kegelscheibengetriebe 1 mit entsprechend großem Übersetzungsbereich.

## Patentansprüche

1. Verstellbares Kegelscheibengetriebe (1), mit zwei gleichachsigen, miteinander drehfesten und um ihre Achse als Drehachse (4) drehbaren Kegelscheiben (2), die an einander zugewandten Stirnseiten hohlkegelförmige Reibflächen (5) aufweisen, und mit einem zwischen den beiden Kegelscheiben (2) angeordneten Kegelring (3), der um seine Achse als Drehachse (6) drehbar ist und dessen Achse parallel zur Achse der Kegelscheiben (2) verläuft, wobei der Kegelring (3) kegelringförmige Reibflächen (7) an einander abgewandten und den Reibflächen (5) der Kegelscheiben (2) zugewandten Stirnseiten aufweist, die auf den Reibflächen (5) der Kegelscheiben (2) wälzen, wobei die Reibflächen (5, 7) aneinander gedrückt werden und ein Abstand der Drehachse (6) des Kegelrings (3) von der Drehachse (4) der Kegelscheiben (2) verstellbar ist.

2. Verstellbares Kegelscheibengetriebe nach Anspruch 1, **dadurch gekennzeichnet, dass** der Kegelring (3) einen An- oder Abtrieb an einem Innenumfang aufweist.

3. Verstellbares Kegelscheibengetriebe nach Anspruch 2, **dadurch gekennzeichnet, dass** der Innenumfang des Kegelrings (3) mit einem An- oder Abtriebsrad (14) kämmt oder wälzt, das exzentrisch zu den Kegelscheiben (2) ist.

4. Verstellbares Kegelscheibengetriebe nach einem der Ansprüche 1 bis 3, **dadurch gekennzeichnet, dass** zu einer Änderung des Abstands der Drehachse (6) des Kegelrings (3) von der Drehachse (4) der Kegelscheiben (2) der Kegelring (3) um eine Schwenkachse (35) schwenkbar ist, die exzentrisch zu der Drehachse (4) der Kegelscheiben (2) und exzentrisch zu der Drehachse (6) des Kegelrings (3) ist.

5. Verstellbares Kegelscheibengetriebe nach Anspruch 4, **dadurch gekennzeichnet, dass** die die Schwenkachse (35) des Kegelrings (3) durch den Kegelring (3) hindurch geht.

6. Verstellbares Kegelscheibengetriebe nach Anspruch 4 oder 5, **dadurch gekennzeichnet, dass** das Kegelscheibengetriebe (1) einen Ringträger (10), an dem der Kegelring (3) um seine Drehachse (6) drehbar gelagert und der um eine Schwenkachse (35) schwenkbar ist, die exzentrisch zu der Drehachse (6) des Kegelrings (3) und zu der Drehachse (4) der Kegelscheiben (2) ist, und eine Spanneinrichtung, die eine Schwenkbewegung in einer Spannrichtung in eine axiale Bewegung wandelt, die die Kegelscheiben (2) zusammen spannt und ihre Reibflächen (5) gegen die Reibflächen (7) des Kegelrings (3) drückt, aufweist, und dass die Spanneinrichtung in der Schwenkrichtung zum Spannen federnd mit dem Ringträger (10) verbunden ist, so dass sowohl die Reibflächen (5, 7) der Kegelscheiben (2) und des Kegelrings (3) gegeneinander gedrückt als auch der Ringträger (10) im Sinne einer Vergrößerung des Abstands der Drehachse (6) des Kegelrings (3) von der Drehachse (4) der Kegelscheiben (2) beaufschlagt wird.

7. Verstellbares Kegelscheibengetriebe nach Anspruch 6, **dadurch gekennzeichnet, dass** die Spanneinrichtung eine Spannscheibe (25) aufweist, die durch Schwenken axial zu den Kegelscheiben (2) verstellbar ist und eine koaxiale, kegelstumpfförmige Laufbahn (26) aufweist, auf der Kugeln (27) wälzen, die sich in einem umlaufenden, die Laufbahn (26) umschließenden und radial nach außen enger werdenden Zwischenraum zwischen einem axial festen Widerlager (29) und einer axial beweglichen Kegelscheibe (2) befinden.

8. Verstellbares Kegelscheibengetriebe nach einem der vorhergehenden Ansprüche, **dadurch gekennzeichnet, dass** das Kegelscheibengetriebe (1) ein Differenzialgetriebe (17) aufweist, das an einem Getriebeein- oder ausgang mit den Kegelscheiben (2) und an einem anderen Getriebeein- oder - ausgang mit dem Kegelring (3) antriebsverbunden ist.

9. Verstellbares Kegelscheibengetriebe nach Anspruch 7, **dadurch gekennzeichnet, dass** das Differenzialgetriebe (17) ein Planetengetriebe (16) ist, dessen Planetenträger (18) mit den Kegelscheiben (2) und dessen Hohlrad (19) mit dem Kegelring (3) des Kegelscheibengetriebes (1) antriebsverbunden ist.

10. Verstellbares Kegelscheibengetriebe nach einem der vorhergehenden Ansprüche, **dadurch gekennzeichnet, dass** das Kegelscheibengetriebe (1) ein zweites Kegelscheibenpaar (32) aufweist, das koaxial innerhalb der Kegelscheiben (2) angeordnet sind und kegelförmige Reibflächen (33) aufweisen, die auf hohlkegelförmigen Reibflächen (34) des Kegelrings (3) wälzen.
